# EUROPEAN PATENT APPLICATION

(11) **EP 2 077 408 A2**
(43) Date of publication of application: **08.07.2009**
(21) Application number: 08022442.1
(22) Date of filing: 23.12.2008
(51) Int. Cl.: F16H 25/22

(54) **Ball screw device**

(30) Priority: 27.12.2007 JP 2007335566
(71) Applicant: JTEKT Corporation, Osaka-shi Osaka 542-8502 (JP)
(72) Inventor: Koyagi, Katsura, Osaka-shi Osaka 542-8502 (JP); Kamikawa, Tsuyoshi, Osaka-shi Osaka 542-8502 (JP); Tachi, Takayuki, Aichi-ken 471-8571 (JP); Kondo, Takuhiro, Tokyo 1056111 (JP)
(74) Representative: Schaeberle, Steffen

(57) **Abstract**

In a ball screw device (1), a ball screw nut (3) is rotated, causing a screw shaft (2) to rectilinearly move in the axial direction, and the limit of the movement of the screw shaft (2) is determined by a stopper (14). The ball screw device (1) includes a hollow shaft (5) that rotates together with the ball screw nut (3) and in which the screw shaft (2) is movably fitted. The hollow shaft (5) is provided with a small diameter portion (12) that exerts a dragging force on the screw shaft (2) before the screw shaft (2) reaches the limit, and a buffer layer (13) is formed on a tip portion of the screw shaft (2).

## Description

### BACKGROUND OF THE INVENTION

### 1. Field of the Invention

The invention relates to a ball screw device, and in particular, to a ball screw device that is used in a form in which a screw shaft rectilinearly moves in the axial direction without rotation.

### 2. Description of the Related Art

A ball screw device that includes a screw shaft and a ball screw nut engaged with the screw shaft with balls interposed therebetween is often used as an electric actuator or in a damper. Japanese Patent Application Publication No. 2006-67649 (JP-A-2006-67649), for example, includes a description in which a ball screw device is used in a damper in which a screw shaft is connected to a motor, so that the screw shaft is rotated to cause a ball screw nut to rectilinearly move in the axial direction.

On the other hand, the ball screw device is also used in a form in which a motor is connected to a ball screw nut and the screw shaft rectilinearly moves without rotation. In this form, in general, a stopper is provided to prevent the screw shaft from moving more than a predetermined distance when a strong force is applied from the outside. Immediately before the screw shaft is stopped by the stopper, the screw shaft is moving fast, and the ball screw nut is rotating at a high speed. Thus, a sudden stop of the screw shaft causes the ball screw nut to exert a large rotational inertial force, and this rotational inertial force can result in the occurrence of brinelling in a raceway of the ball screw.

### SUMMARY OF THE INVENTION

The invention provides a ball screw device that is suitable for use in a form in which a screw shaft rectilinearly moves in the axial direction without rotation.

A ball screw device according to the invention includes: a screw shaft; a ball screw nut engaged with the screw shaft with balls interposed between the ball screw nut and the screw shaft; a stopper that determines a limit of movement of the screw shaft in a forward direction when the ball screw nut is rotated to cause the screw shaft to move rectilinearly in the forward direction along an axial direction; and a braking portion that reduces a speed of the forward movement of the screw shaft before the screw shaft reaches the limit.

The ball screw device is, in some cases, used in the form of an actuator, in which a ball screw nut is rotated by a motor, which causes a screw shaft to move rectilinearly. The ball screw device is, in other cases, used in the form of a damper, in which a screw shaft is rectilinearly moved by a force exerted from the outside, which causes a ball screw nut to rotate, and the electromagnetic force generated by a motor is used as the damping force.

In either case, the screw shaft reciprocates, and in general, a stopper is provided that prevents the screw shaft from moving more than a predetermined distance in a predetermined direction, which is herein referred to as the "forward direction," which means the direction in which an impact of the stopper occurs, and which may be any of the vertical direction, the longitudinal direction, the lateral direction, etc. The stopper can be formed by providing the screw shaft with a flange portion that contacts a housing when the screw shaft moves beyond a predetermined distance. Alternatively, the stopper may be formed on a member that moves rectilinearly together with the screw shaft, or may be provided on a member (a housing, a hollow shaft, etc.) that does not move rectilinearly. The stopper may be provided not only for one direction of the reciprocation but also for the opposite direction. In this case, a braking portion that is associated with the stopper of the opposite direction may be further provided. When the limit of the movement of the screw shaft in the forward direction is determined by the stopper, the screw shaft is forcibly stopped when the limit is reached. When this occurs, if the speed of the screw shaft is fast, the rotational inertial force of the nut is large at the time of sudden stop of the screw shaft, and therefore, brinelling in a raceway of the ball screw can occur.

The braking portion is not for stopping the screw shaft, but for reducing the impact load at the time of the impact of the stopper. The range of travel in the braking portion is shorter than the range of travel of the stopper so that the impact of the stopper occurs after the screw shaft travels over the range of travel in the braking portion. Although the screw shaft rectilinearly moves fast when a large force is applied to the screw shaft in the axial direction, the screw shaft that is moving forward fast receives a force, of which the direction is opposite to the moving direction, from the braking portion. Thus, the speed of the rectilinear movement (forward movement speed) of the screw shaft is reduced, so that the rotational speed of the ball screw nut is reduced and the rotational inertial force of the ball screw nut is reduced. Then, the screw shaft is forcibly stopped by the stopper. At this time, the rotational inertial force of the ball screw nut has already been reduced, and the occurrence of brinelling in a raceway of the ball screw is prevented. After the screw shaft is forcibly stopped by the stopper, the screw shaft is returned to the original state.

The braking portion can be implemented in various forms. For example, the ball screw device may further include a hollow shaft that is fixed to the ball screw nut and extends in the forward direction of the screw shaft, and the braking portion may include: a small diameter portion, formed in an end portion of the hollow shaft, that exerts a dragging force on the screw shaft; and a buffer layer formed on at least one of the small diameter portion of the hollow shaft and an outer circumferential surface of a tip portion of the screw shaft. The minimum inner diameter of the small diameter portion may be smaller than the outer diameter of the tip portion of the screw shaft. The small diameter portion may be tapered so that the inner diameter of the small diameter portion gradually decreases toward the forward direction of the screw shaft. The small diameter portion may have at least one step portion in which the inner diameter of the hollow shaft is reduced stepwise in the forward direction of the screw shaft. The step portion may include: a straight portion that has an inner diameter smaller than the outer diameter of the tip portion of the screw shaft; and a tapered portion between the straight portion and a portion of the hollow shaft that has an inner diameter larger than the inner diameter of the straight portion. The small diameter portion may have a plurality of the step portions. The plurality of step portions may include: a first straight portion of which a minimum inner diameter is substantially equal to the outer diameter of the tip portion of the screw shaft; a third straight portion that is positioned on a hollow-shaft tip side and of which a minimum inner diameter is smaller than the outer diameter of the tip portion of the screw shaft; a second straight portion that is positioned between the first and third straight portions and of which an inner diameter is intermediate between the inner diameters of the first and third straight portions; a first tapered portion between the first straight portion and a portion of the hollow shaft that has an inner diameter larger than the inner diameter of the first straight portion; a second tapered portion between the first and second straight portions; and a third tapered portion between the second and third straight portions. The buffer layer may be made of resin.

It is preferable that the hollow shaft be made of metal and double as a rotor of a motor. The small diameter portion of the hollow shaft can be formed by tapering the end portion of the hollow shaft in such a manner that the inner diameter of the hollow shaft gradually decreases toward the forward direction of the screw shaft. The tip portion of the screw shaft may either be tapered or not be tapered, that is, may be straight. The buffer layer is, for example, formed on an outer circumferential surface of the tip portion of the screw shaft, but may be provided on the inner circumferential surface of the hollow shaft. For example, the small diameter portion of the hollow shaft may be formed by applying resin, in a tapered form, to the inner surface of the cylindrical rotor of the motor, and such a resin layer may be used also as the buffer layer. When a large force is applied to the screw shaft in the axial direction, the screw shaft is fitted into the small diameter portion of the hollow shaft, and the speed of the forward movement of the screw shaft is reduced. Thus, the rotational speed of the ball screw nut is reduced, and the rotational inertial force of the ball screw nut is reduced. The buffer layer reduces the impact when the screw shaft is fitted into the small diameter portion of the hollow shaft, and facilitates returning the screw shaft into the original state. The material for the buffer layer is typically polyurethane, polyamide, or the like, for example. However, it is also possible to use, for example, a paper material for the buffer layer. The buffer layer also provides a function of preventing the ball screw nut from falling off the screw shaft.

The braking portion may include an elastic member. The braking portion may further include a support portion that is fixed so that a relative position between the ball screw nut and the support portion in the axial direction is invariable, and the elastic member may be provided on at least one of the support portion and the screw shaft. The elastic member may be provided on the support portion and may receive the screw shaft that is moving in the forward direction. When the elastic member is provided on the support portion side, the weight of the screw shaft, which is a movable portion, is not increased, and in addition, it is possible to minimize the possibility of the occurrence of a problem such as falling off. The braking portion may include an air damper that receives the screw shaft that is moving in the forward direction. Examples of the elastic member include various types of springs and an elastic body made of rubber or synthetic resin.

For example, the ball screw device may further include a hollow shaft that is fixed to the ball screw nut and extends in the forward direction of the screw shaft, and the air damper may include: a cover that closes an opening at the tip of the hollow shaft; and a seal member that is provided on a tip portion of the screw shaft and seals a gap between the screw shaft and the hollow shaft. In this case, the opening at the tip of the hollow shaft is closed by the cover to form a closed-end cylinder, and the tip portion of the screw shaft serves as a piston. The end portion of the hollow shaft may either be tapered or be straight. An orifice for slowly discharging the air in the air chamber may be provided in the hollow shaft or in the cover.

In some cases, a spline for guiding the rectilinear movement of the screw shaft is integrally provided on the screw shaft. Such a spline may be a ball spline, or a fitting type spline such as an involute spline.

For example, the ball screw device may include: a screw shaft provided with a thread groove and a spline groove; a ball screw nut engaged with the thread groove of the screw shaft with balls interposed between the ball screw nut and the screw shaft; a hollow shaft integrated with the ball screw nut; a ball spline outer cylinder that is engaged with the spline groove of the screw shaft with balls interposed therebetween and guides the axial rectilinear motion of the screw shaft; a housing that rotatably supports the hollow shaft through a bearing and fixedly supports the ball spline outer cylinder; a motor including a magnet (rotor) fixed on an outer circumferential surface of the hollow shaft and a stator fixed on the inner circumferential surface of the housing so as to face the magnet; a stopper for preventing the screw shaft from moving rectilinearly more than a predetermined distance; and the above-described braking portion.

With the ball screw device of the invention, it is possible to reduce the impact load when the screw shaft is forcibly stopped, and it is therefore possible to prevent the occurrence of brinelling in a raceway of the ball screw. Thus, a problem is solved that the moment of inertia increases when the overall size of the ball screw device is enlarged to obtain a high strength, and it is therefore possible to reduce the size and weight of the ball screw device.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is a longitudinal section showing a first embodiment of a ball screw device according to the invention;
FIG. 2 is an enlarged longitudinal section of a main portion of FIG. 1;
FIG. 3 is an enlarged longitudinal section of a main portion showing a second embodiment of the ball screw device according to the invention;
FIG 4 is an enlarged longitudinal section of a main portion showing a third embodiment of the ball screw device according to the invention;
FIG. 5 is an enlarged longitudinal section of a main portion showing a fourth embodiment of the ball screw device according to the invention; and
FIG. 6 is an enlarged longitudinal section of a main portion showing a fifth embodiment of the ball screw device according to the invention.

### DETAILED DESCRIPTION OF EMBODIMENTS

Embodiments of the invention will be described below with reference to the drawings. In the following description, the terms "right" and "left" mean the right and left in the drawings, respectively, and the left direction is the forward direction.

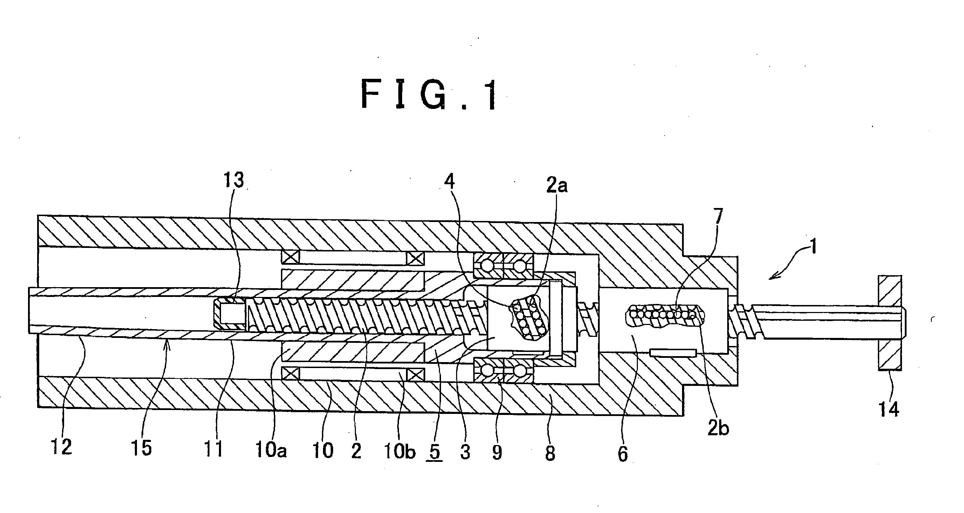

FIG. 1 shows a first embodiment of a ball screw device according to the invention.

The ball screw device 1 includes: a steel screw shaft 2, extending in the right-and-left direction, that is provided with a thread groove 2a and a spline groove 2b extending in the right-and-left direction; a ball screw nut 3 engaged with the thread groove 2a of the screw shaft 2 with balls 4 interposed therebetween; a hollow shaft 5 integrated with the ball screw nut 3 and extending to the left; a ball spline outer cylinder 6 that is engaged with the spline groove 2b of the screw shaft 2 with balls 7 interposed therebetween and guides the right and left (axial) rectilinear motion of the screw shaft 2; a housing 8 that rotatably supports the hollow shaft 5 through bearings 9 and fixedly supports the ball spline outer cylinder 6; a motor 10 including a magnet (rotor) 10a fixed on an outer circumferential surface of the hollow shaft 5 and a stator 10b fixed on the inner circumferential surface of the housing 8 so as to face the magnet 10a; a stopper 14 for preventing the screw shaft 2 from moving forward more than a predetermined distance; and a braking means 15 that reduces the speed of the forward movement of the screw shaft 2 before the impact of the stopper 14.

The screw shaft 2 and the hollow shaft 5 are concentrically disposed, and, because the hollow shaft 5 doubles as the rotor of the motor 10, the ball screw device 1 is used in a form in which the hollow shaft 5 and the ball screw nut 3 are rotated to rectilinearly move the screw shaft 2.

In FIG 1, the stopper 14 is formed so as to be brought into contact with the housing 8 when the screw shaft 2 moves to the left and the movement distance in the forward direction reaches a predetermined value (limit position of the screw shaft 2).

The hollow shaft 5 has a large diameter portion 11 that is substantially cylindrical and that has a required radial gap between the hollow shaft 5 and the large diameter portion 11, and a small diameter portion 12 that is continuous with the left end of the large diameter portion 11 and of which the minimum inner diameter is smaller than the outer diameter of the tip portion of the screw shaft 2.

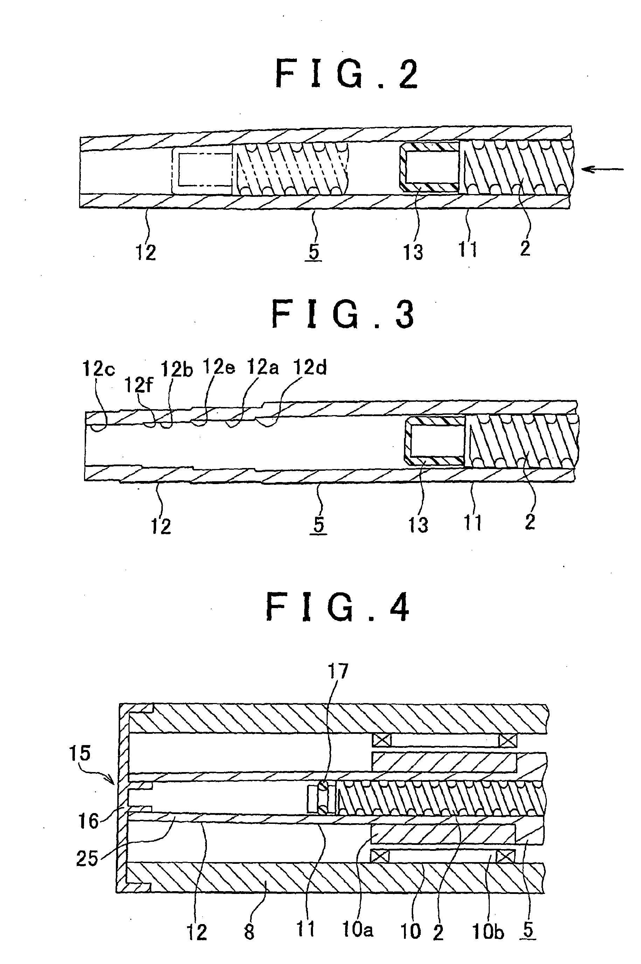

As shown in FIG 2 in an enlarged manner, the small diameter portion 12 of the hollow shaft 5 is tapered so that the inner diameter of the small diameter portion 12 gradually decreases and the inner diameter of the end portion of the hollow shaft 5 is smaller than the outer diameter of the tip portion of the screw shaft 2. The braking means 15 includes the small diameter portion 12 of the hollow shaft 5 and a resin layer 13, which serves as the buffer layer, formed at a left end portion (left end surface and outer circumferential surface of the left end portion) of the screw shaft 2 that is fitted into the small diameter portion 12. The inner diameter of the small diameter portion is the inner diameter of the small diameter portion itself or, when the buffer layer is formed on the inner circumferential surface of the small diameter portion, is the inner diameter that is defined by the inner circumferential surface of the buffer layer. The outer diameter of the tip portion of the screw shaft is the outer diameter of the tip portion of the screw shaft itself or, when the buffer layer is formed on the outer circumferential surface of the tip portion of the screw shaft, is the outer diameter that is defined by the outer circumferential surface of the buffer layer. Thus, when the minimum inner diameter of the small diameter portion is smaller than the outer diameter of the tip portion of the screw shaft, the buffer layer formed on one of the small diameter portion and the tip portion of the screw shaft can interfere with the other thereof or with the buffer layer formed on the other thereof. The situation in which the minimum inner diameter of the small diameter portion is smaller than the outer diameter of the tip portion of the screw shaft is not limited to the situation in which each of the small diameter portion and the screw shaft has a circular cross section and the diameters of the cross sections of the small diameter portion and the screw shaft are in such a relation. For example, when a protruding portion that protrudes inward is provided on the small diameter portion side, the inner diameter that is measured from the top of the protruding portion is the minimum inner diameter, and the ball screw device in which such a minimum inner diameter is smaller than the outer diameter of the tip portion of the screw shaft is also included in the invention.

The ball screw device 1 is suitable for use in an electromagnetic suspension for a car, for example. The electromagnetic suspension is a damper in which the axial motion transmitted from a tire is converted to a rotational motion via a ball screw mechanism, the motor 10 receives the rotational motion, and the electromagnetic force generated in the motor 10 is used as the damping force. In some cases, at the time of over contraction of the suspension such as when the car runs over a bump, the bump stopper provided on a portion that rectilinearly moves hits a flange portion of a motor or the like, and the motor 10 that is rotating at a high speed is therefore suddenly stopped, whereby an excessively large axial force can be applied to the ball screw portion (2, 3 and 4) due to the inertial torque of the motor 10. Thus, it is an issue how to protect the ball screw mechanism in such a case.

According to the above-described ball screw device 1, before the stopper 14 hits the housing 8, the left end portion (the end portion on the forward side, that is, the tip portion) of the screw shaft 2 is fitted into the small diameter portion 12 of the hollow shaft 5, whereby a dragging force (braking force) is applied to the screw shaft 2. As a result, the speed of the forward movement of the screw shaft 2 is reduced, which results in reduction in the rotational speed of the motor 10. Thus, when the stopper 14 hits the housing 8, the inertial torque of the motor 10 has already been reduced. In this way, the ball screw mechanism is protected, and the occurrence of a problem such as the occurrence of brinelling is prevented.

The construction of the braking means 15 is not limited to the above-described construction as long as the braking means 15 reduces the speed of the forward movement of the screw shaft 2 before the impact of the stopper 14. Examples of such a construction will be described below.

FIG. 3 shows a second embodiment of the ball screw device according to the invention. The shape of the small diameter portion 12 of the hollow shaft 5 that is used to produce friction is changed from that of the first embodiment. In the second embodiment, the small diameter portion 12 of the hollow shaft 5 includes: a first straight portion 12a that is positioned on the large diameter portion 11 side and of which the minimum inner diameter is substantially equal to the outer diameter of the tip portion of the screw shaft 2; a third straight portion 12c that is positioned on the hollow-shaft tip side and of which the minimum inner diameter is smaller than the outer diameter of the tip portion of the screw shaft 2; a second straight portion 12b that is positioned between the first straight portion 12a and the third straight portion 12c and of which the inner diameter is intermediate between the inner diameters of the first straight portion 12a and the third straight portion 12c; a first tapered portion 12d between the large diameter portion 11 and the first straight portion 12a; a second tapered portion 12e between the first straight portion 12a and the second straight portion 12b; and a third tapered portion 12f between the second straight portion 12b and the third straight portion 12c.

According to the above-described ball screw device 1, as in the case of the ball screw device 1 of the first embodiment, before the stopper 14 hits the housing 8, the left end portion (the end portion on the forward side, that is, the tip portion) of the screw shaft 2 is fitted into the small diameter portion 12 of the hollow shaft 5, whereby a dragging force (braking force) is applied to the screw shaft 2. As a result, the speed of the forward movement of the screw shaft 2 is reduced, which results in reduction in the rotational speed of the motor 10. Thus, when the stopper 14 hits the housing 8, the inertial torque of the motor 10 has already been reduced. In this way, the ball screw mechanism is protected, and the occurrence of a problem such as the occurrence of brinelling is prevented.

The first embodiment shown in FIGS. 1 and 2 and the second embodiment shown in FIG. 3 differ from each other in the braking force and the position at which the braking force is applied to the screw shaft 2. Specifically, in the first embodiment, the small diameter portion 12 of the hollow shaft 5 is tapered, and therefore, the braking force is applied such that the force gradually increases from the right to the left in the hollow shaft 5 in FIG. 2. On the other hand, in the second embodiment, the small diameter portion 12 of the hollow shaft 5 is stepped, so that it is possible to apply a predetermined braking force to the screw shaft 2 in the braking effected by the first straight portion 12a that first interferes with the tip portion of the screw shaft 2. In addition, when it is required to effect braking against a larger load, further braking is effected by the second straight portion 12b that secondly interferes with the tip portion of the screw shaft 2. Thus, according to the ball screw device of the second embodiment, it is possible to more clearly determine the position and force of braking. Whether the ball screw device of the first embodiment or the ball screw device of the second embodiment is used can be determined based on the required force and position of braking.

FIG. 4 shows a third embodiment of the ball screw device according to the invention.

In FIG. 4, the braking means 15 includes: the small diameter portion 12 of the hollow shaft 5 that is tapered such that the inner diameter of the small diameter portion 12 is gradually reduced and the inner diameter of the end portion of the small diameter portion 12 is smaller than the outer diameter of the tip portion of the screw shaft 2; a cover 16 that is fixed to an end portion of the housing 8 and closes the opening at the tip of the hollow shaft 5; and an O ring (annular seal member) 17 provided on a tip portion of the screw shaft 2. In the braking means 15, the opening at the tip of the small diameter portion 12 of the hollow shaft 5 is closed by the cover 16 to form a closed-end cylinder, and the tip portion of the screw shaft 2 with the O ring 17 acts as a piston, whereby an air damper 25 is created.

According to the ball screw device 1 of the third embodiment, before the stopper 14 hits the housing 8, the end portion of the screw shaft 2 is fitted into the small diameter portion 12 of the hollow shaft 5, and the O ring 17 is in sliding contact with the inner surface of the small diameter portion 12 of the hollow shaft 5, whereby an air chamber is formed that, as the screw shaft 2 moves forward, generates a counterforce that increases with the forward movement of the screw shaft 2. As a result, the speed of the forward movement of the screw shaft 2 is reduced, which results in reduction in the rotational speed of the motor 10. Thus, when the stopper 14 hits the housing 8, the inertial torque of the motor 10 has already been reduced. In this way, the ball screw mechanism is protected, and the occurrence of a problem such as the occurrence of brinelling is prevented. Thereafter, when the screw shaft 2 is moved so that the left end portion of the screw shaft 2 is positioned in the large diameter portion 11 of the hollow shaft 5, the original state is recovered in which there is an air gap between the outer circumferential surface of the screw shaft 2 and the inner circumferential surface of the hollow shaft 5.

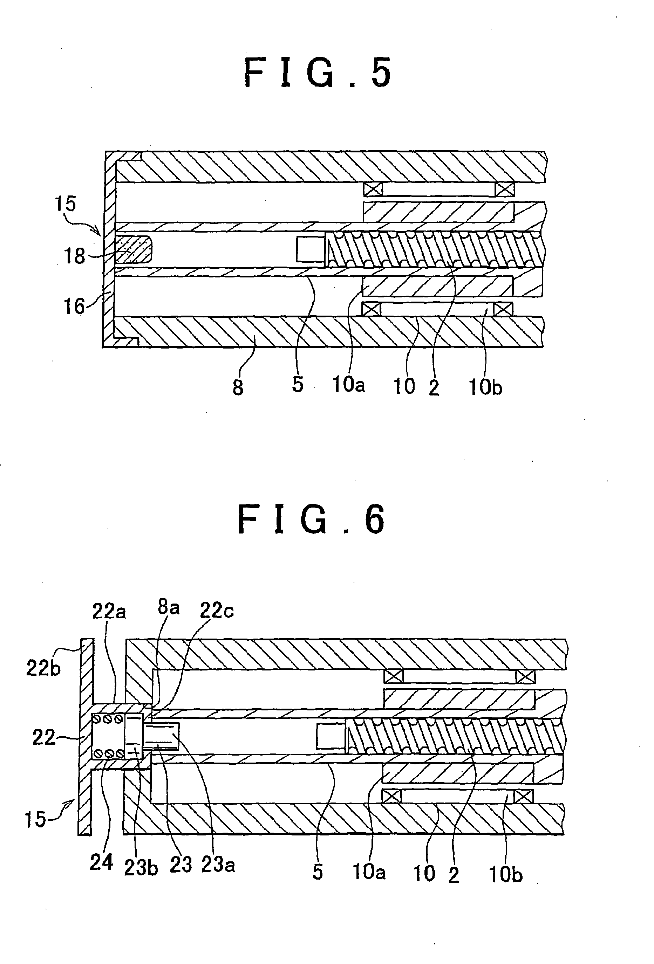

FIG. 5 shows a fourth embodiment of the ball screw device according to the invention, in which an elastic member is used in the braking means 15.

In FIG 5, the hollow shaft 5 has a constant diameter also in the end portion, and the braking means 15 includes: the cover 16 that is fixed to an end portion of the housing 8 and closes the opening at the tip of the hollow shaft 5; and an elastic body (elastic member) 18, made of polyurethane foam, that is provided on the cover 16 and receives the tip portion of the screw shaft 2.

According to the screw device 1 of the fourth embodiment, before the stopper 14 hits the housing 8, the end portion of the screw shaft 2 hits the elastic body 18, whereby a force is applied that is directed opposite to the direction in which the screw shaft 2 is moving. As a result, the speed of the forward movement of the screw shaft 2 is reduced, which results in reduction in the rotational speed of the motor 10. Thus, when the stopper 14 hits the housing 8, the inertial torque of the motor 10 has already been reduced. In this way, the ball screw mechanism is protected, and the occurrence of a problem such as the occurrence of brinelling is prevented.

FIG 6 shows a fifth embodiment of the ball screw device according to the invention.

In FIG. 6, the hollow shaft 5 has a constant diameter also in the end portion, and the braking means 15 includes a fixed spring-receiving member 22, a movable spring-receiving member 23, and a coil spring 24. The fixed spring-receiving member 22 includes: a cylindrical portion 22a; a discoid portion 22b provided at the left end of the cylindrical portion 22a; and a flange portion 22c provided at the right end of the cylindrical portion 22a, wherein the right end portion of the cylindrical portion 22a is fixed to an edge portion of an opening 8a provided in the housing 8. The movable spring-receiving member 23 includes: a column portion 23a and a discoid portion 23b provided at the left end of the column portion 23a, wherein the movable spring-receiving member 23 is disposed so as to be movable in the cylindrical portion 22a of the fixed spring-receiving member 22. The coil spring 24 serves as the elastic member, supported between the discoid portion 22b of the fixed spring-receiving member 22 and the discoid portion 23b of the movable spring-receiving member 23.

According to the ball screw device 1 of the fifth embodiment, when the screw shaft 2 is stopped by the stopper 14, the left end (tip) of the screw shaft 2 is first brought into contact with the movable spring-receiving member 23, and the movable spring-receiving member 23 moves to the left while pressing the elastic member 24, whereby the speed of the forward movement of the screw shaft 2 is reduced, which results in reduction in the rotational speed of the motor 10. Thus, when the stopper 14 hits the housing 8, the inertial torque of the motor 10 has already been reduced. In this way, the ball screw mechanism is protected, and the occurrence of a problem such as the occurrence of brinelling is prevented.

Although, in the above-described embodiments 4 and 5, constructions are shown in which the elastic member is provided on the support portion, the elastic member may be provided on the tip portion of the screw shaft.

The above-described ball screw device 1 can be used as an electric actuator. In this case, the ball screw device 1 is used in a form in which the rotational driving force from the motor is converted into a thrust force directed in the axial direction of the screw shaft 2 via the ball screw nut 3, the bearings 9 bear the axial reaction force to the thrust force, helping the screw shaft 2 to rectilinearly move, the ball screw nut 3 receives the axial force applied to the screw shaft 2, and the ball spline outer cylinder 6 bears produced torque.

While the invention has been described with reference to example embodiments thereof, it is to be understood that the invention is not limited to the described embodiments or constructions. To the contrary, the invention is intended to cover various modifications and equivalent arrangements. In addition, while the various elements of the example embodiments are shown in various combinations and configurations, other combinations and configurations, including more, less or only a single element, are also within the spirit and scope of the invention.

## Claims

1. A ball screw device (1) **characterized by** comprising:
a screw shaft (2);
a ball screw nut (3) engaged with the screw shaft (2) with balls interposed between the ball screw nut (3) and the screw shaft (2);
a stopper (14) that determines a limit of movement of the screw shaft (2) in a forward direction when the ball screw nut (3) is rotated to cause the screw shaft (2) to move rectilinearly in the forward direction along an axial direction; and
braking means (15) for reducing a speed of the forward movement of the screw shaft (2) before the screw shaft (2) reaches the limit.

2. The ball screw device (1) according to claim 1, further comprising a hollow shaft (5) that is fixed to the ball screw nut (3) and extends in the forward direction of the screw shaft (2);
wherein the braking means (15) includes:
a small diameter portion (12), formed in an end portion of the hollow shaft (5), that exerts a dragging force on the screw shaft (2); and
a buffer layer formed on at least one of the small diameter portion (12) of the hollow shaft (5) and an outer circumferential surface of a tip portion of the screw shaft (2).

3. The ball screw device (1) according to claim 2, wherein a minimum inner diameter of the small diameter portion (12) is smaller than an outer diameter of the tip portion of the screw shaft (2).

4. The ball screw device (1) according to claim 2 or 3, wherein
the small diameter portion (12) is tapered so that the inner diameter of the small diameter portion (12) gradually decreases toward the forward direction of the screw shaft (2).

5. The ball screw device (1) according to any one of claims 2 to 4, wherein
the small diameter portion (12) has at least one step portion (12a to 12f) in which the inner diameter of the hollow shaft (5) is reduced stepwise in the forward direction of the screw shaft (2).

6. The ball screw device (1) according to claim 5, wherein
the step portion (12a to 12f) includes: a straight portion (12a, 12b, 12c) that has an inner diameter smaller than the outer diameter of the tip portion of the screw shaft (2); and a tapered portion (12d, 12e, 12f) between the straight portion (12a, 12b, 12c) and a portion of the hollow shaft (5) that has an inner diameter larger than the inner diameter of the straight portion (12a, 12b, 12c).

7. The ball screw device (1) according to claim 5, wherein
the small diameter portion (12) has a plurality of the step portions (12a to 12f).

8. The ball screw device (1) according to claim 7, wherein
the plurality of step portions (12a to 12f) include:
a first straight portion (12a) of which a minimum inner diameter is substantially equal to the outer diameter of the tip portion of the screw shaft (2);
a third straight portion (12c) that is positioned on a hollow-shaft tip side and of which a minimum inner diameter is smaller than the outer diameter of the tip portion of the screw shaft (2);
a second straight portion (12b) that is positioned between the first and third straight portions (12a, 12c) and of which an inner diameter is intermediate between the inner diameters of the first and third straight portions (12a, 12c);
a first tapered portion (12d) between the first straight portion (12a) and a portion of the hollow shaft (5) that has an inner diameter larger than the inner diameter of the first straight portion (12a);
a second tapered portion (12e) between the first and second straight portions (12a, 12b); and
a third tapered portion (12f) between the second and third straight portions (12b, 12c).

9. The ball screw device (1) according to any one of claims 2 to 8, wherein the buffer layer (13) is made of resin.

10. The ball screw device (1) according to any one of claims 1 to 9, wherein the braking means (15) includes an elastic member (18, 24).

11. The ball screw device (1) according to claim 10, wherein the braking means (15) further includes a support portion (16, 22) that is fixed so that a relative position between the ball screw nut (3) and the support portion (16, 22) in the axial direction is invariable, and the elastic member (18, 24) is provided on at least one of the support portion (16, 22) and the screw shaft (2).

12. The ball screw device (1) according to claim 11, wherein the elastic member is provided on the support portion (16, 22) and receives the screw shaft (2) that is moving in the forward direction.

13. The ball screw device (1) according to claim 1, wherein the braking means (15) includes an air damper (25) that receives the screw shaft (2) that is moving in the forward direction.

14. The ball screw device (1) according to claim 13, further comprising a hollow shaft (5) that is fixed to the ball screw nut (3) and extends in the forward direction of the screw shaft (2),
wherein the air damper (25) includes:
a cover (16) that closes an opening at a tip of the hollow shaft (5); and
a seal member (17) that is provided on a tip portion of the screw shaft (2) and seals a gap between the screw shaft (2) and the hollow shaft (5).
